**Europäisches Patentamt**

**European Patent Office**

**Office européen des brevets**

(19)

(11) Veröffentlichungsnummer: **0 218 109**
**B1**

(12)     **EUROPÄISCHE PATENTSCHRIFT**

(45) Veröffentlichungstag der Patentschrift: **25.07.90**

(21) Anmeldenummer: **86112375.0**

(22) Anmeldetag: **06.09.86**

(51) Int. Cl.⁵: **G 09 B 29/00**

(54) **Verfahren und Vorrichtung zur automatischen Darstellung von farbigen Landkarten.**

(30) Priorität: **12.09.85 DE 3532568**

(43) Veröffentlichungstag der Anmeldung:
**15.04.87 Patentblatt 87/16**

(45) Bekanntmachung des Hinweises auf die
Patenterteilung:
**25.07.90 Patentblatt 90/30**

(84) Benannte Vertragsstaaten:
**AT BE CH DE FR GB IT LI LU NL SE**

(56) Entgegenhaltungen:
**EP-A-0 108 689**
**DE-A-3 405 125**
**GB-A-2 100 100**
**GB-A-2 104 759**
**GB-A-2 152 322**

**SIEMENS FORSCHUNGS- UND
ENTWICKLUNGSBERICHTE, Band 13, Nr. 3,
1984, Seiten 118-120, Springer-Verlag,
Würzburg, DE; A. COLDITZ et al.: "Computer-
aided interactive map processing"**

(73) Patentinhaber: **DORNIER GMBH
Postfach 1420
D-7990 Friedrichshafen 1 (DE)**

(72) Erfinder: **Engelhardt, Hans Peter, Dipl.-Ing.
Sommerweg 30
D-7990 Friedrichshafen (DE)**
Erfinder: **Laske, Michael, Dipl.-Ing.
Wasenöschstrasse 57
D-7990 Friedrichshafen (DE)**

(74) Vertreter: **Landsmann, Ralf, Dipl.-Ing.
c/o DORNIER GMBH Postfach 1420
D-7990 Friedrichshafen 1 (DE)**

Courier Press, Leamington Spa, England.

**Beschreibung**

Die Erfindung betrifft ein Verfahren gemäß Oberbegriff des Patentanspruchs.

Bei der konventionellen geografischen Informationsdarstellung ist die Arbeit mit Landkarten bis jetzt im wesentlichen an das Medium Papier gebunden. Für verschiedene Anwendungsbereiche gibt es Landkarten mit unterschiedlichen Informationsinhalten, die im allgemeinen durch anwendungsspezifische Uberdrucke auf ein vorhandenes Basis-Landkartenmaterial hergestellt werden.

Um schnell wechselnde Zusatzinformationen, wie sie sich z.B. bei militärischen Lagedarstellungen ergeben, auf Kartenmaterial darzustellen, werden verschiedene Techniken benutzt. Hierzu zählen das Zeichnen und Plotten auf Papierkarten oder über die Karte gelegten Folien; die Oarstellung auf transparenten Plasmadisplays, auf deren Rückseite die entsprechende Landkarte von einem Dia, Film oder Mikrofiche projiziert wird; Darstellung auf Projektionsflächen, wobei die Lagedarstellung mittels Laserprojektor und die Landkarte mittels Kartenprojektor übereinander projiziert wird. Für diese Verfahren wird ein hoher Geräteaufwand benötigt, der die Landkarte und das Overlay mit unterschiedlichen Verfahren darstellt. Sie sind für eine rechnergesteuerte Verarbeitung und Übertragung der kombinierten Karten/Overlay-Information an andere Arbeitsplätze nicht geeignet. Auch sind verschiedene Verfahren zur Darstellung von Landkarten auf Farbrasterbildschirmen bekannt. Zum Beispiel verwenden Ferranti-Inertial Systems Department, Edingburgh/Scotland und Bendix-Flight, Systems Division ein Verfahren, mit dem auf 35 mm-Film aufgenommene Landkarten mit einer Farb-Video-Kamera aufgenommen werden und über Video-Signal auf einem Monitor dargestellt werden. Der gewählte Kartenausschnitt wird hierbei durch entsprechenden Filmtransport vor die Kamera positioniert (Ferranti COMED 2036 Combined Display und Bendix MAP Reader System-Broschüren). Bei einem anderen bekannten in Wehrtechnik 1/Januar 1984 (Sonderdruck) beschriebenen Verfahren der Fa. Heidenhain, Traunreut, werden auf Mikro-Dias abgebildete Landkarten mittels eines Projektors auf eine Mattscheibe projiziert. Hierbei erfolgt die Herstellung der notwendigen farbigen Strukturen dadurch, daß mehrere dielektrische Schichten aus Materialien mit unterschiedlichen optischen Eigenschaften im Hochvakuum übereinander aufgebracht werden. Die farbigen Strukturen entstehen durch Interferenz in diesen übereinanderliegenden Schichten. Bei einem weiteren von Perceptronics und Marconi VORAS bekannten und verwendeten Verfahren werden Landkarten auf 35 mm-Film aufgenommen, der anschliessend auf Videoband überspielt wird. Von diesem Videoband wird eine Kopie auf eine Video-Bildplatte analog gespeichert (Perceptronics Video Disc Mapping Capabilities Briefing, 28. Februar 1984, TVM-Tactical Video Map System und Marconi Space and Defence System, VORAS-Video overlay resource availability system (Broschüren).

Schließlich ist aus der DD-A1-227 549 ein Verfahren und eine Anordnung zur Kompression von Bildpunkten bei der Abtastung farbiger Vorlagen bekannt, bei dem zur Vermeidung einer kompletten Datenspeicherung bei gleichzeitiger Gewährleistung einer hohen Auflösung jeweils ein paarweiser Vergleich benachbarter Bildpunkte innerhalb einer Zeile und zwischen mehreren Zeilen erfolgt. Mit einer Schaltungsanordnung unter Verwendung zweier Komparatoren werden die am höchsten bewerteten digitalen Farbcodes ausgelesen und einer weiteren Verarbeitung zugeführt.

Das Verfahren beschreibt ausschließlich die Abtastung farbiger Vorlagen, wobei lediglich eine Kompression der darin enthaltenen Bildpunkte erfolgt. Eine direkte Verarbeitung des damit gewonnenen Datenmaterials ohne Umweg ist damit nicht möglich, weil der Datenbestand innerhalb eines Rechners erzeugt wird. Das Verfahren ist nur der erste Schritt zu einer weiteren Verarbeitung, wozu jedoch ein weiterer Rechner benötigt wird.

Mit diesen bekannten Verfahren sind Landkarten auf Bildschirmen nur als Kartenausschnitte darstellbar ohne eine Möglichkeit, diese mit schnell wechselnden Zusatzinformationen zu versehen und darzustellen. Damit ist es auch nicht möglich, schnell wechselnde Informationen lokal an mehreren Arbeitsplätzen gleichzeitig darzustellen oder durch schnelle Oatenübertragungsstrecken zur Weiterverarbeitung an entfernt liegende Arbeitsplätze zu übertragen.

Schliesslich ist noch aus SIEMENS FORSCHUNGS- UND ENTWICKLUNGS-BERICHTE, Band 13, Nr. 3, 1984, Seiten 118 bis 120, Springer-Verlag, Würzburg, DE; A.C. Colditz et al.: "Computer-aided interactive map processing" ein Verfahren bekannt, Kartenmaterial, beispielsweise auch einfarbige Kopien einzelner Layout-Stufen, zeilenweise abzutasten, zu speichern, auf einem Bildschirm darzustellen und gegebenenfalls zu bearbeiten und zu verändern.

Aufgabe der Erfindung ist es, ein Verfahren und eine Vorrichtung anzugeben, mit dem es möglich ist, schwarz/weiß Druckfolien von farbigen Landkarten, die zeilenweise abgetastet auf einem Datenträger und in Form von Datenbeständen vorliegen, auf einem hochauflösenden Farbrasterbildschirm so darzustellen, daß ein originalgetreues Abbild der Landkarte entsteht.

Gelöst wird die gestellte Aufgabe erfindungsgemäß durch die kennzeichnenden Merkmale des Anspruchs 1.

Die Erfindung hat den Vorteil, daß als Ausgangsmaterial die zur Herstellung des Landkartenmaterials verwendeten schwarz/weiß Druckfolien dienen.

Zum Beispiel werden für eine 1:50.000 Landkarte vier schwarz/weiß Druckfolien verwendet, die den vier Druckfarben Schwarz, Blau, Braun und Grün entsprechen. Diese Druckfolien werden einschließlich ihrer Referenzpunkte zeilenweise beispielsweise mit einer Auflösung von 100 oder 200 µm abgetastet.

Ergebnis sind vier Oatenbestände (Datenfiles) mit je M (Punkte/Zeile) × N (Anzahl der Zeilen bzw. Punkte/Spalte) × 1 Bit Information.

Die so entstandenen Datenbestände werden in zwei Arbeitsschritten automatisch aufbereitet. Im ersten Schritt werden die einzelnen Druckfolien wie während des Druckvorganges übereinandergelegt, wobei für jeden einzelnen Bildpunkt festgestellt wird, welche Oruckfarben an diesem punkt beteiligt sind. Durch eine vorher festgelegte Prioritätsreihenfolge wird nur die Farbe in dem zugehörigen Bild-Datenbestand (Bildfile) gesetzt, welche die höhere Priorität hat. Alle übrigen Farben dieses Punktes werden in ihren Bild-Datenbeständen gelöscht. Im zweiten Schritt wird jeder Farbe eines jeden Bildpunktes ein Farbcode zugeordnet. Der daraus resultierende Bild-Datenbestand enthält dann beispielsweise 1024 × 1024 bzw. 2048 × 2048 × N Bits, wobei $2^N \leq$ die Anzahl der darzustellenden Farben ist, sowie eine Zuordnungstabelle die angibt, welcher Farbcode welchem Farbton (Anteile von R, G, B) entspricht.

Zur Darstellung wird der Bild-Datenbestand auf den Massenspeicher (z.B. eine digitale Laserdisk) eines Landkarten-Darstellungssystems zusammen mit einer geographischen Referenz-Koordinateninformation abgespeichert und von dort in den Bildpunktspeicher des Darstellungssystems eingegeben. Dabei wird zugleich die Zuordnungstabelle für Farbcode und Farbton in die Bild-Einfärbeeinheit (Video-Lookup-Table) eines Video AD-Wandlers geladen. Bei der Darstellung des Bildpunktspeicherinhaltes auf dem hochauflösenden Farbrasterbildschirm wird über die Bild-Einfärbeinheit dem Farbcode eines jeden Bildpunktes (Pixel) der zugehörige Farbton zugeordnet.

Ausführungsbeispiele sind nachstehend beschrieben und durch Skizzen erläutert.

Es zeigen:

Figuren 1 bis 4 Abbildungen von verschiedenen Druckfolien (Layer) der Farben einer Landkarte,

Figuren 5 bis 8 Abbildungen der Druckfolien gemäß Figuren 1 bis 4 nach erfolgter Bildaufbereitung,

Figur 9 eine aus den Druckfolien und nach der Bildaufbereitung gemäß den Figuren 1 bis 8 resultierende Abbildung auf dem Farbrasterbildschirm,

Figur 10 ein Blockschaltbild einer Vorrichtung zur Landkartendarstellung (ohne peripheriegeräte),

Figur 11 Funktion Landkartenfensterverschieben der Vorrichtung zur Landkartendarstellung.

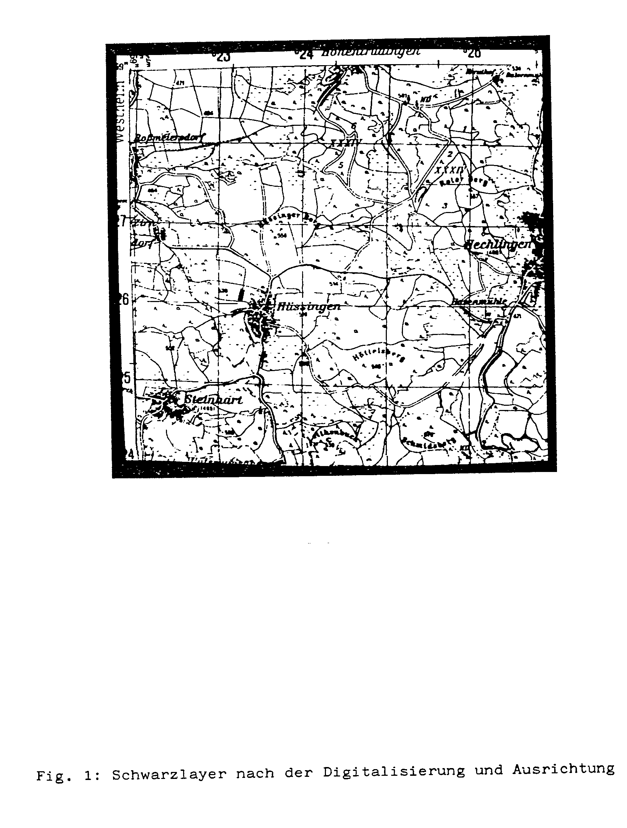

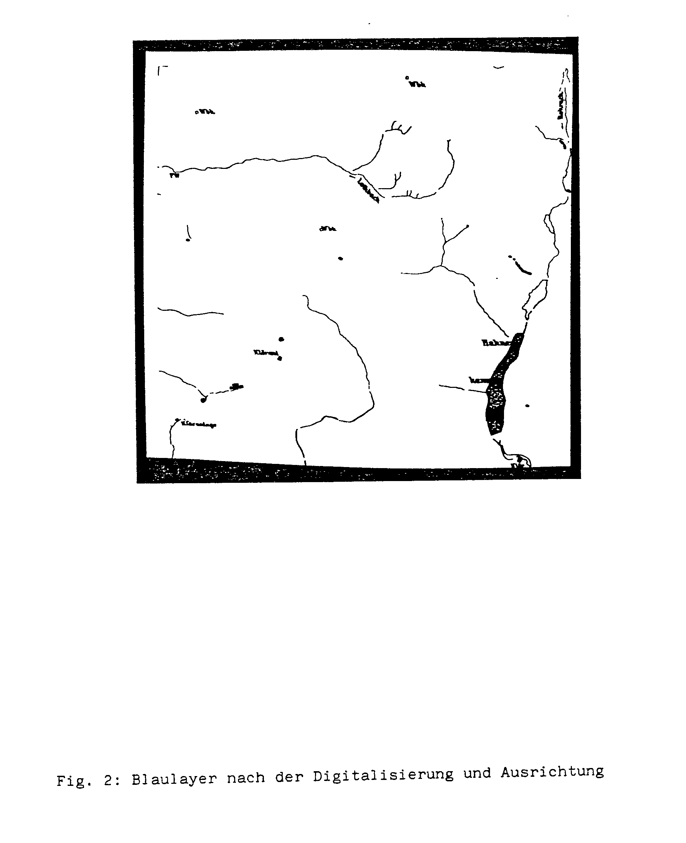

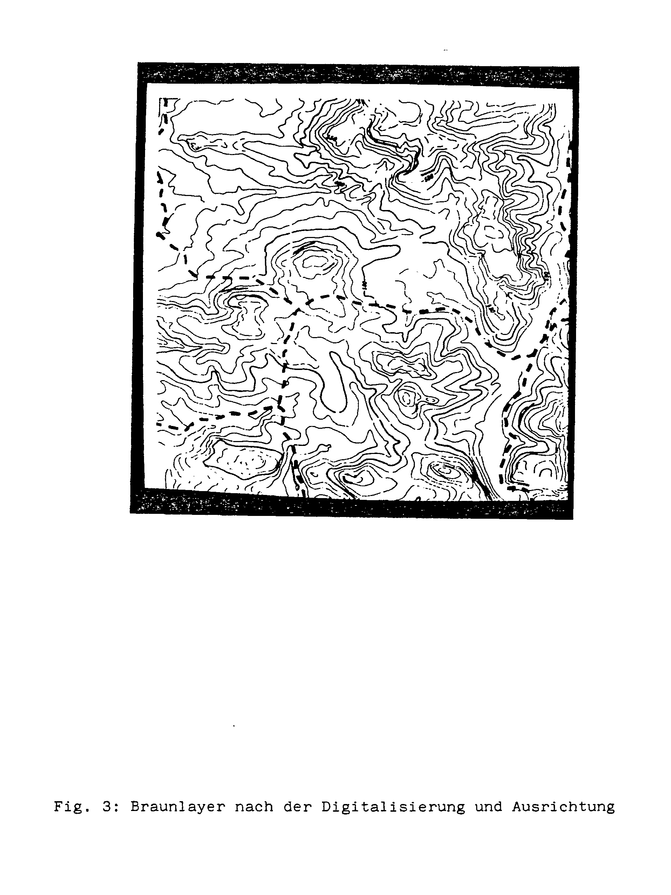

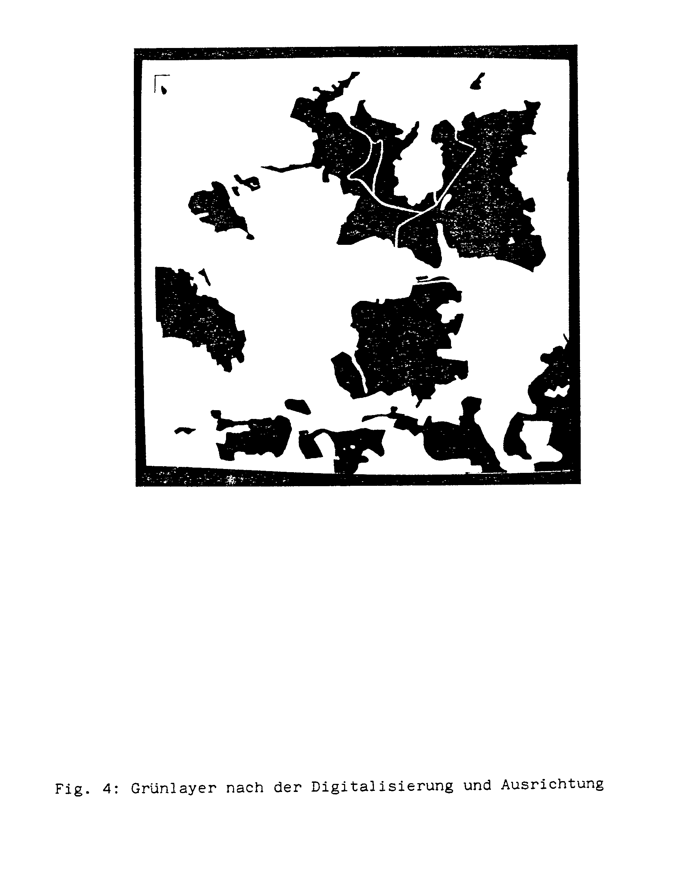

Die aus den Figuren 1 bis 4 ersichtlichen Abbildungen eines Ausschnittes von einer Landkarte ist das Ergebnis nach der Erstellung des Datenbestandes von zum Druck der Landkarte vorgesehenen Bild- oder Schichtfolien (Layer). Entsprechend der zum Druck der Landkarte verwendeten Druckfolien werden davon die Farbauszüge erstellt. Die in den Figuren 1 bis 4 gezeigten Bildausschnitte sind nach der Erstellung der Datenbestände als Schwarzlayer (Figur 1), Blaulayer (Figur 2), Braunlayer (Figur 3) und Grünlayer (Figur 4) dargestellt. Davon zeigt Figur 1 die gesamte Karteninformation, die Figuren 2 bis 4 jeweils die in der Landkarte enthaltene Farbinformation. Hierbei können entsprechend der in der Landkarte enthaltenen Farben und die zum Druck verwendeten Druckfolien gegeneinander verschoben werden.

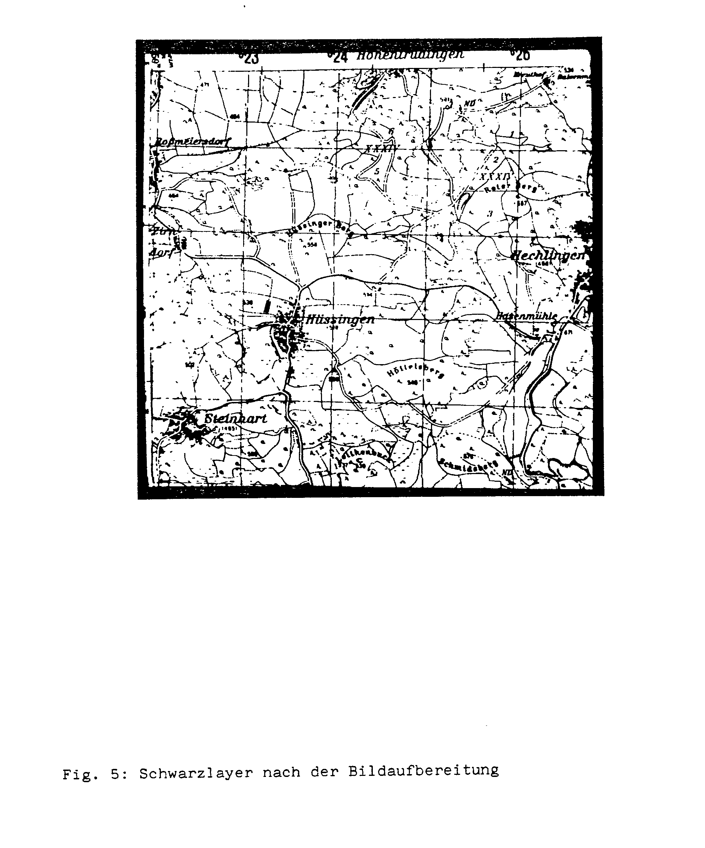

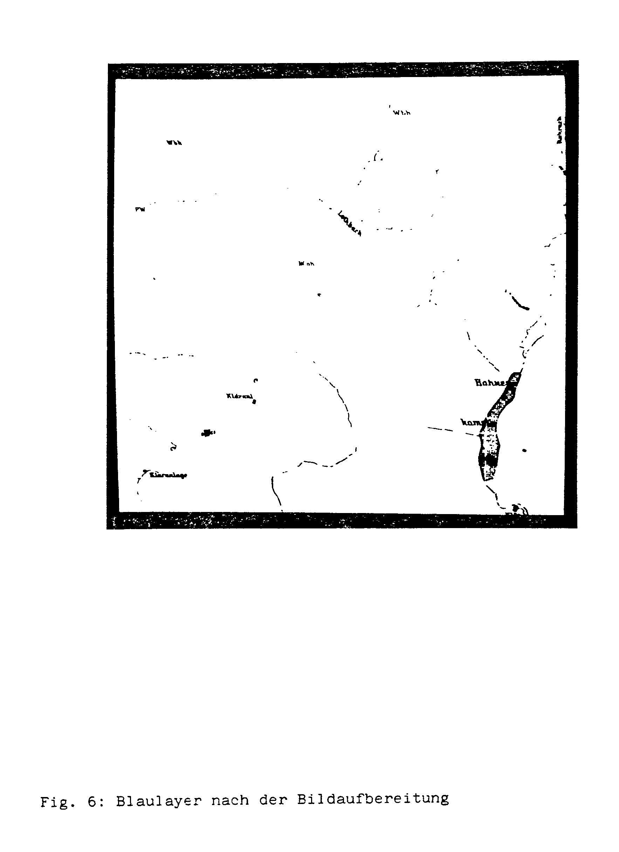

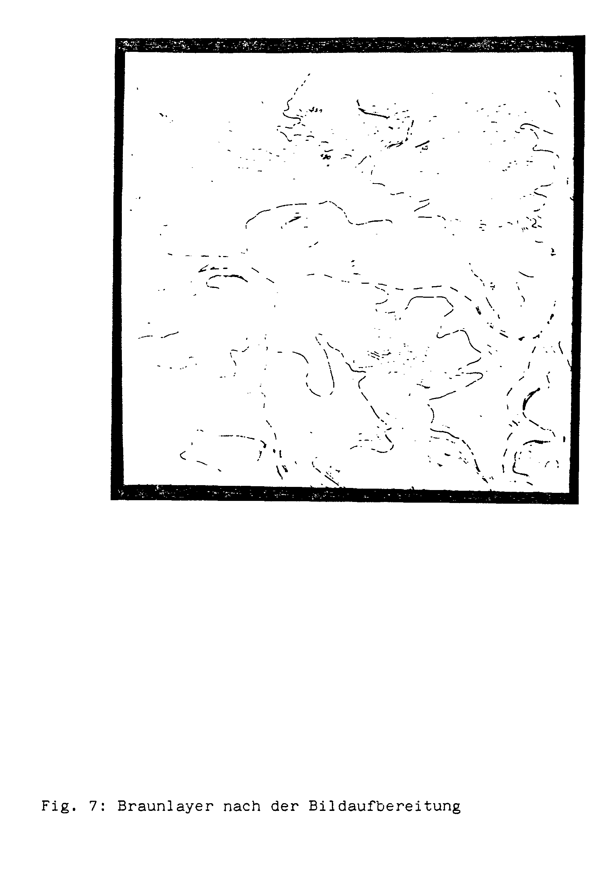

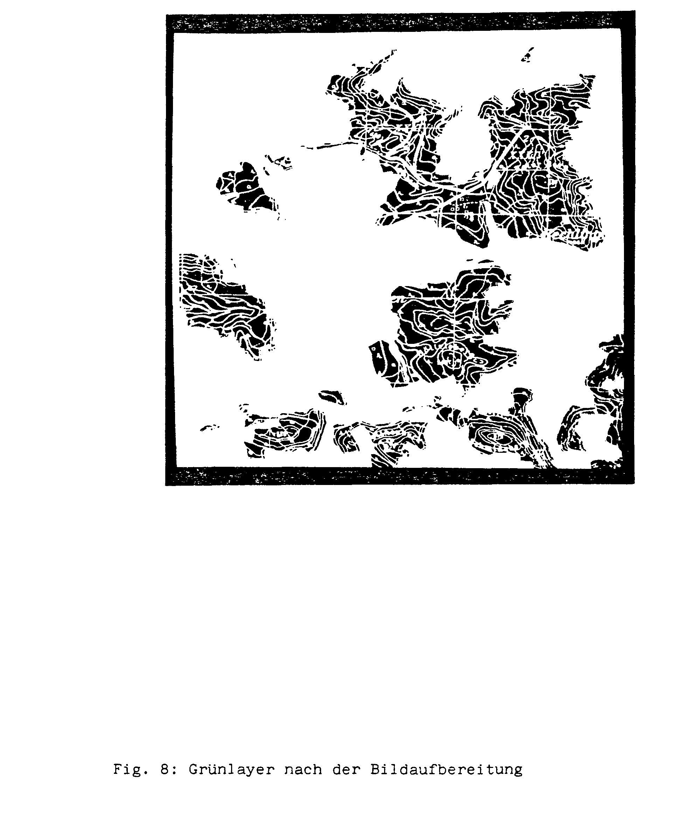

Figuren 5 bis 8 zeigen Abbildungen nach erfolgtem ersten Schritt der Bildaufbereitung. Die hierbei verwendeten Bildoder Schichtfolien (Layer) enthalten die im Original (Landkarte) vorhandene Farbe, wobei durch eine vorher festgelegte Reihenfolge der Priorität nur die Farbe in der zugehörigen Bildoder Schichtfolie festgelegt wird, die mit der höchsten Priorität bewertet wurde. Alle verbleibenden Farben werden gelöscht. Zuvor werden die einzelnen Bild- oder Schichtfolien, ähnlich wie beim Druckvorgang, übereinandergelegt und für jeden einzelnen Bildpunkt festgestellt, welche Farben in diesem Bildpunkt enthalten sind. Als Resultat werden davon neue Bild- oder Schichtfolien als Schwarzlayer mit dem gesamten Inhalt der Landkarte (Figur 5), Blaulayer mit entsprechendem Blauanteil (Figur 6), Braunlayer mit entsprechendem Braunanteil (Figur 7) und Grünlayer mit entsprechendem Grünanteil (Figur 8) erhalten (z.B. aus einer Landkarte 1:50.000).

Beim zweiten Arbeitsschritt wird einer jeden Farbe eines jeden Bildpunktes ein Farbcode zugeordnet. Die daraus resultierende Bildoder Schichtfolie enthält dann z.B. 1024 × 1024 bzw. 2048 × 2048 × N Bits, wobei $2^N \leq$ Anzahl der darzustellenden Farben ist, sowie eine Tabelle, aus der entnommen wird, welcher Farbcode welchem Farbton der R, G, B-Anteile entspricht.

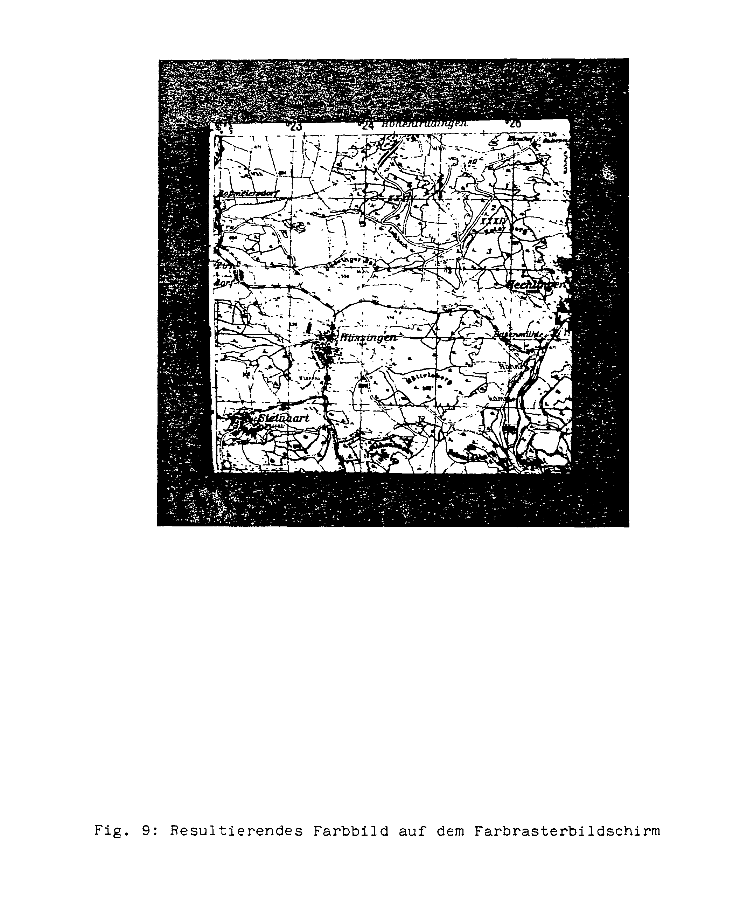

Jede der Bildoder Schichtfolien wird mit ihrem Bild-Datenbestand (Bildfile) über ein Landkarten-Darstellungssystem auf einen Massenspeicher, z.B. einer digitalen Laserdisk zusammen mit einer geographischen Referenz-Koordinateninformation gespeichert. Von dort wird das Bildfile in einen Bildpunktspeicher des Landkarten-Darstellungssystems geladen, wobei zugleich die Zuordnungstabelle Farbcode zu Farbton in eine Video-Lookup-Table (Bild-Einfärbeinheit) eines Video-AD-Wandlers eingegeben wird. Bei der Darstellung des Bildpunktspeicherinhalts auf einem hochauflösenden Farbrasterbildschirm wird über die Video-Lookup-Table dem Farbcode jedes Bildpunktes der zugehörige Farbton zugeordnet. Das daraus resultierende Farbbild der Landkarte zeigt Figur 9.

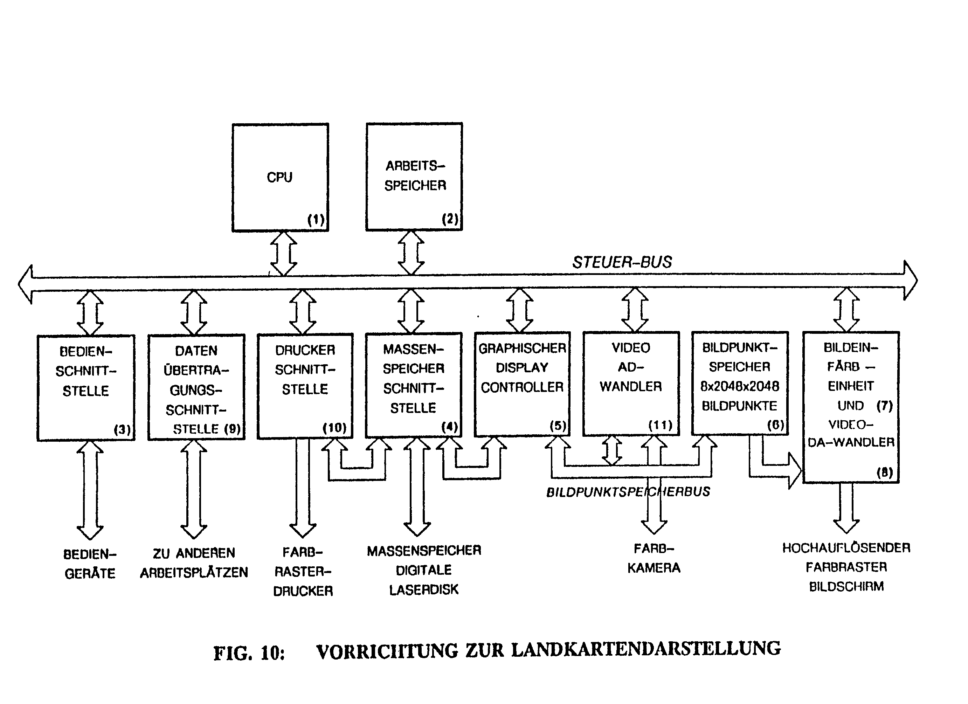

Aus Figur 10 ist ein Blockschaltbild einer Vorrichtung zur Landkartendarstellung ersichtlich, mit welcher die automatischen Funktionen durchgeführt werden. Nicht gezeigt sind die zum Betrieb notwendigen Peripheriegeräte wie hochauflösender Farbmonitor, Massenspeicher, digitale Laserdisk, hochauflösender Farbrasterdrucker, Farbkamera und Bediengeräte, da es sich hier um handelsübliche Geräte handelt.

Die Vorrichtung zur Landkartendarstellung hat folgende Funktion:

— jede beliebige auf dem Massenspeicher digitale Laserdisk vorhandene Landkarte mit der Referenz-Koordinateninformation auf ein Kommando des Benutzers automatisch und unverzüglich in 1 bis 2 Sekunden vom Massenspeicher in den Bildpunktspeicher zu laden,

— die zugehörige Farbcode/Farbton-Zuordnungstabelle automatisch in die Bild-Einfärbeinheit mit einem $3 \times 8$ Bit Code, der $2^{24}$ Farbtöne ermöglicht, zu laden, den Inhalt des Bildpunktspeichers automatisch, über die Einfärbeinheit entsprechend den Landkartenfarben eingefärbt, bildpunktgenau und geographisch koordinatengetreu auf dem hochauflösenden ($1024 \times 1024$ Bildpunkte) Farbrasterbildschirm sichtbar zu machen,

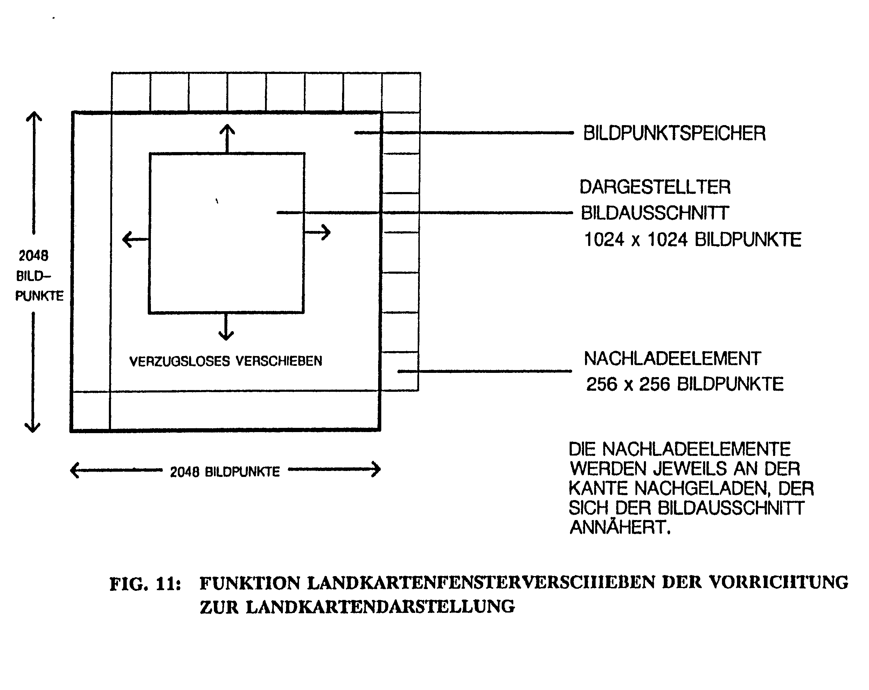

— das an das auf dem Farbrasterbildschirm sichtbare Landkartegebiet angrenzende Landkartegebiet automatisch vom Massenspeicher in den für den Benutzer nicht sichtbaren Teil des insgesamt $2048 \times 2048$ Bildpunkte großen Bildpunktspeichers zu laden (vergleiche Figur 11),

— das angrenzende, im für den Benutzer nicht sichtbaren Teil des Bildpunktspeichers gespeicherte Landkartegebiet bei Verschiebung des Farbraster-Bildschirmfensters in beliebige Richtungen automatisch sichtbar zu machen (vergleiche Figur 11),

— in den nach dem Verschieben des Farbraster-Bildschirmfensters jetzt nicht sichtbaren Teil des Bildpunktspeichers kontinuierlich in $256 \times 256$ Bildpunkte großen Nachladeelementen die angrenzenden Landkartegebiete automatisch vom Massenspeicher nachzuladen und automatisch bei Erreichen dieses Gebietes auf dem Farbrasterbildschirm sichtbar zu machen (vergleiche Figur 11),

— den Inhalt des Bildpunktspeichers (Landkarte und/oder Zusatzinformationen) automatisch wieder aus dem Bildpunktspeicher auszulesen und entweder auf dem Massenspeicher z.B. zu Dokumentationszwecken abzuspeichern oder über eine schnelle Datenstrecke auf mehrere lokale und auch entfernt liegende Arbeitsplätze verzögerungsfrei zu übertragen oder auf einem hochauflösenden Farbrasterdrucker auf Papier oder Folie auszudrucken,

— über eine an die Vorrichtung angeschlossene Farbfernsehkamera farbige Bilder automatisch an jede beliebige Stelle auch ausschnittsweise in den Bildpunktspeicher zu laden und in einem Fenster der Landkarte auf dem Farbrasterbildschirm darzustellen.

Die aus dem Blockschaltbild (Figur 10) ersichtlichen Elemente zeigen im Einzelnen folgenden Funktionsablauf:

Eine zentrale Recheneinheit CPU 1 steuert über den Steuer-Bus alle automatischen Abläufe beim Betrieb der Vorrichtung. Die dazu notwendigen Steuerbefehlslisten befinden sich im Arbeitsspeicher 2. Die zur Bedienung der Vorrichtung notwendigen peripheren Bediengeräte werden über die Bedienschnittstelle 3 angesteuert.

Die nach dem beschriebenen Verfahren digitalisierten Landkarten sind auf dem Massenspeicher Digitale Laserdisk gespeichert und werden über die Massenspeicherschnittstelle 4 und den graphischen Display Controller 5 in den Bildpunktspeicher 6 geladen.

Über den Steuer-Bus wird gleichzeitig die zugehörige Farbcode/Farbton-Zuordnungstabelle in die Bild-Einfärbeinheit 7 geladen und über den Video-AD-Wandler 8 das Landkartenbild, richtig eingefärbt und bildpunkt-/koordinatengetreu, auf dem hochauflösenden Farbrasterbildschirm sichtbar gemacht. Anschließend werden auf dem gleichen Weg (Massenspeicher — Massenspeicherschnittstelle 4 — Graphischer Display Controller 5 — Bildpunktspeicher 6), die an das sichtbare Landkartegebiet angrenzenden Landkartegebiete in den für den Benutzer unsichtbaren Teil des Bildpunktspeichers 6 geladen.

Die Verschiebung des Farbraster-Bildschirmfensters steuert die CPU 1 über den Graphischen Display Controller 5, ebenso wie das beschriebene Nachladen.

Auf dem Weg Bildpunktspeicher 6 — Graphischer Display Controller 5 — Massenspeicherschnittstelle 4 werden Landkarten mit im Bildpunktspeicher 6 befindlichen Zusatzinformationen auf dem Massenspeicher Digitale Laserdisk abgespeichert.

Die Übertragung der Landkarten mit Zusatzinformationen zu anderen Arbeitsplätzen erfolgt über den Weg Bildpunktspeicher 6 — Graphischer Display Controller 5 — Massenspeicherschnittstelle 4 — Arbeitsspeicher 2 — Datenübertragungsschnittstelle 9.

Der Ausdruck der Landkarten mit Zusatzinformationen erfolgt über den Weg Bildpunktspeicher 6 — Graphischer Display Controller 5 — Massenspeicherschnittstelle 4 — Druckerschnittstelle 10 zum Farbrasterdrucker.

Die von einer Farbkamera gelieferten Bilder werden über den Video-AD-Wandler 11 automatisch in digitale Signale umgewandelt und an eine beliebige Stelle bzw. in ein beliebiges Fenster in den Bildpunktspeicher 6 eingeschrieben und mit oder ohne Landkarte, über die Bildeinfärbeinheit 7 eingefärbt, auf dem hochauflösenden Farbrasterbildschirm dargestellt.

Figur 11 zeigt die Funktion Landkartenfensterverschieben der Vorrichtung zur Landkartendarstellung. Von dem im Bildpunktspeicher 6 geladenen Landkartenbild von $2048 \times 2048$ Bildpunkten (Figur 10) ist jeweils nur ein Ausschnitt von $1024 \times 1024$ Bildpunkten auf dem hochauflösenden Farbrastermonitor sichtbar. Dieses $1024 \times 1024$ Bildpunkte große Landkartenfenster (Bildausschnitt) kann, gesteuert über CPU 1 und graphischen Display Controller 5, kontinuierlich über den Bildpunktspeicher 6 verschoben werden. Wird beim Verschieben ein Mindestabstand zu einem Rand des Bildpunktspeichers 6 unterschritten, so wird vom Massenspeicher Digitale Laserdisk über den beschriebenen Weg automatisch das an den derzeitigen Rand des im Bildpunktspeicher 6 enthaltenen Landkartegebiets anschließende Landkartegebiet in den für den Benutzer nicht sichtbaren Teil des Bildpunktspeichers 6 nachgeladen.

**Patentanspruch**

Verfahren zur Darstellung von farbigen Landkarten auf einem hochauflösenden Farbrasterbildschirm eines Landkarten-Darstellungssystems mit Bildpunktspeicher, bei welchem die für den Druck der Landkarten verwendeten Druckfolien, die das je einer Druckfarbe zugeordnete Muster in schwarz/weiß enthalten, zeilenweise abgetastet werden, und die daraus erzeugten Datenbestände in einem zum Darstellungssystem gehörenden Massenspeicher zusammen mit einer geographischen Referenz-Koordinateninformation gespeichert und von dort bei Bedarf in den Bildpunktspeicher weitergegeben werden, dadurch gekennzeichnet, daß

a) die entstandenen Datenbestände aufbereitet werden, wobei die einzelnen Druckfolien wie während des Druckvorganges übereinandergelegt werden und für jeden einzelnen Bildpunkt festgelegt wird, welche Druckfarben an diesem punkt beteiligt sind und durch eine vorher festgelegte Prioritätsreihenfolge nur die Farbe in dem zugehörigen Bilddatenbestand gesetzt wird, welche die höchste Priorität hat und alle übrigen Farben dieses Punktes gelöscht werden,

b) eine Zuordnungstabelle für Farbcode und Farbton in eine zum Darstellungssystem gehörende Bild-Einfärbeinheit (Video-Lookup-Table) eingegeben wird und

c) der Bildpunktspeicherinhalt auf dem hochauflösenden Farbrasterbildschirm dargestellt wird, wobei über die Bildeinfärbeinheit dem Farbcode eines jeden Bildpunktes (Pixels) der zugehörige Farbton zugeordnet wird.

Um zu gewährleisten, daß das Nachladen unabhängig von der Verschieberichtung des Landkartenfensters mit gleicher Geschwindigkeit erfolgt, ist das Landkartengebiet auf dem Massenspeicher Digitale Laserdisk in Kacheln von 256 × 256 Bildpunkten gespeichert und wird kachelweise in den Bildpunktspeicher 6 geladen.

Nach Beendigung des Nachladevorgangs wird der Bildpunktspeicherrand entsprechend dem jetzt geladenen Landkartengebiet automatisch verschoben und auf dem Farbrasterbildschirm das nachgeladene Landkartengebiet bei Erreichen desselben durch Verschieben des Fensters sichtbar.

Durch diese Funktion kann das Landkartenfenster von 1024 × 1024 Bildpunkten kontinuierlich über das gesamte auf dem Massenspeicher Digitale Laserdisk gespeicherte Landkartengebiet verschoben werden.

Die Vorrichtung zur Landkartendarstellung stellt zusammen mit den notwendigen Peripheriegeräten als Gesamtsystem das Landkartendarstellungssystem dar.

**Revendication**

Procédé pour l'affichage de cartes colorées sur un écran couleur de haute définition d'un système d'affichage de cartes avec mémoire de points d'image, par lequel les feuilles d'impression utilisées pour l'impression des cartes géographiques et contenant en noir et blanc le dessin respectivement associé à une couleur d'imprimerie sont explorées ligne par ligne, et les fichiers de données ainsi crées sont stockés, conjointement avec une information de coordonnées géographiques de référence, dans une mémoire de masse faisant partie dudit système d'affichage à partir de laquelle elles sont transférées selon les besoins dans la mémoire de points d'image, caractérisé en ce que

a) les fichiers de données créés sont traités, les différentes feuilles d'impression étant superposées comme pendant l'opération d'impression, et pour chaque point d'image individuel on déterminé les couleurs d'impression participant à ce point en plaçant dans les fichiers de données d'image associés, par un ordre de priorité déterminé à l'avance, uniquement la couleur correspondant à la priorité la plus élevée et en effaçant toutes les autres couleurs de ce point,

b) une table d'association pour le code couleur et la teinte est introduite dans une unité de coloration vidéo (video-lookup table) associée au système d'affichage, et que

c) le contenu de la mémoire de points d'image est affiché sur l'écran couleur de haute définition, en associant au code couleur de chaque point d'image (pixel) la teinte correspondante par l'intermédiaire de l'unité de coloration d'image.

**Claim**

1. Method for displaying coloured maps on a high resolution colour picture screen of a map display system with a pixel memory, in the case of which the printed films which are used for printing the maps and contain the black/white pattern each associated with a printing colour, are scanned in a linear manner, and the resultant data files are stored together with a geographic reference co-ordinate datum in mass storage forming part of the display system and from there are transferred as required into the pixel memory, characterised in that

a) the resultant data files are prepared, the individual printed layers, as during the printing process, being superimposed and it being established for each individual pixel which print colours are involved at this point and only the colour which has the highest priority according to a previously established priority sequence being fixed in the associated image data file and all other colours of this point being cancelled;

b) an allocation table for colour codes and colour tones is input into a video look-up table forming part of the display system; and

c) the content of the pixel memory is displayed on the high resolution colour picture screen, the associated colour tone being allocated to the colour code of each pixel by means of the video look-up table.

Fig. 1: Schwarzlayer nach der Digitalisierung und Ausrichtung

Fig. 2: Blaulayer nach der Digitalisierung und Ausrichtung

Fig. 3: Braunlayer nach der Digitalisierung und Ausrichtung

Fig. 4: Grünlayer nach der Digitalisierung und Ausrichtung

Fig. 5: Schwarzlayer nach der Bildaufbereitung

Fig. 6: Blaulayer nach der Bildaufbereitung

Fig. 7: Braunlayer nach der Bildaufbereitung

Fig. 8: Grünlayer nach der Bildaufbereitung

Fig. 9: Resultierendes Farbbild auf dem Farbrasterbildschirm

| CPU (1) | ARBEITS-SPEICHER (2) |

STEUER-BUS

| BEDIEN-SCHNITT-STELLE (3) | DATEN ÜBERTRA-GUNGS-SCHNITT-STELLE (9) | DRUCKER SCHNITT-STELLE (10) | MASSEN-SPEICHER SCHNITT-STELLE (4) | GRAPHISCHER DISPLAY CONTROLLER (5) | VIDEO AD-WANDLER (11) | BILDPUNKT-SPEICHER 8x2048x2048 BILDPUNKTE (6) | BILDEIN-FÄRB — EINHEIT UND (7) VIDEO-DA-WANDLER (8) |

BILDPUNKTSPEICHERBUS

| BEDIEN-GERÄTE | ZU ANDEREN ARBEITSPLÄTZEN | FARB-RASTER-DRUCKER | MASSENSPEICHER DIGITALE LASERDISK | | FARB-KAMERA | | HOCHAUFLÖSENDER FARBRASTER BILDSCHIRM |

FIG. 10:   VORRICHTUNG ZUR LANDKARTENDARSTELLUNG

BILDPUNKTSPEICHER

DARGESTELLTER
BILDAUSSCHNITT
1024 x 1024 BILDPUNKTE

NACHLADEELEMENT
256 x 256 BILDPUNKTE

DIE NACHLADEELEMENTE
WERDEN JEWEILS AN DER
KANTE NACHGELADEN, DER
SICH DER BILDAUSSCHNITT
ANNÄHERT.

2048
BILD–
PUNKTE

VERZUGSLOSES VERSCHIEBEN

2048 BILDPUNKTE

**FIG. 11: FUNKTION LANDKARTENFENSTERVERSCHIEBEN DER VORRICHTUNG ZUR LANDKARTENDARSTELLUNG**

EP 0 218 109 B1